# EUROPÄISCHE PATENTSCHRIFT

(11) **EP 3 542 608 B1**
(45) Veröffentlichungstag und Bekanntmachung des Hinweises auf die Patenterteilung: **07.06.2023**
(21) Anmeldenummer: 19151112.0
(22) Anmeldetag: 10.01.2019
(51) Int. Cl.: A01B 71/02, A01D 41/127

(54) **DATENÜBERTRAGUNGSSYSTEM FÜR LANDWIRTSCHAFTLICHE ARBEITSMASCHINEN**
DATA TRANSFER SYSTEM FOR AGRICULTURAL WORK MACHINES
SYSTÈME DE TRANSMISSION DE DONNÉES POUR ENGINS AGRICOLES

(30) Priorität: 22.03.2018 DE 102018106777
(43) Veröffentlichungstag der Anmeldung: 25.09.2019
(73) Patentinhaber: CLAAS Selbstfahrende Erntemaschinen GmbH, 33428 Harsewinkel (DE)
(72) Erfinder: Berger, Arthur, 49143 Bissendorf (DE); Meyer, Lennart, 52062 Aachen (DE); Dieckmeyer, Sascha, 49326 Kelle (DE); Schröder, Axel, 33330 Gütersloh (DE); Grove, Carsten, 48361 Beelen (DE)

(56) Entgegenhaltungen:
- EP-A1- 2 987 396
- EP-A1- 3 076 248
- DE-A1-102015 121 210

## Beschreibung

Die Erfindung betrifft eine landwirtschaftliche Arbeitsmaschine nach dem Oberbegriff von Anspruch 1.

Datenübertragungssysteme zur Übertragung von Daten an landwirtschaftliche Arbeitsmaschinen sind aus dem Stand der Technik bereits bekannt.

Beispielsweise ist in der DE 10 2015 114 569 A1 ein Verfahren beschrieben, mittels welchem Kalibrierdaten und Messdaten zur Bestimmung einer Betriebsgröße aus Messdaten ausgetauscht werden. EP 3 076 248 offenbart eine landwirtschaftliche Arbeitsmaschine bei der miteinander konkurrierenden Strategien durch Mehrzieloptimierung kombiniert werden können.

Ein Problem bei der Übertragung von Daten an ein Fahrerassistenzsystem einer landwirtschaftlichen Arbeitsmaschine und dem Durchführen eines Einstellvorgangs an der landwirtschaftlichen Arbeitsmaschine ist, dass hierdurch Konflikte mit einer aktuell verwendeten Einstellung entstehen können. Insbesondere wenn der Einstellvorgang sofort ausgelöst wird, kann dies den Arbeitsprozess der landwirtschaftlichen Arbeitsmaschine zum Teil erheblich stören. Zudem kann der Fahrer der Arbeitsmaschine durch die nicht von ihm vorgenommene Einstellungsänderung überrascht werden und ggf. intuitiv nicht gewollte Gegeneinstellungen vornehmen, welche den Arbeitsprozess der landwirtschaftlichen Arbeitsmaschine weiter stören.

Der Erfindung liegt somit das Problem zugrunde, das bekannte Datenübertragungssystem derart auszugestalten und weiterzubilden, dass Arbeitsprozesse einer landwirtschaftlichen Arbeitsmaschine möglichst optimal ablaufen können.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die Erkenntnis, dass zumindest in dem Daten empfangenden Fahrerassistenzsystem Konfliktverarbeitungsstrategien hinterlegt sein können und durch Abarbeitung mindestens einer der hinterlegten Konfliktverarbeitungsstrategien ein Konflikt zwischen einer aktuell verwendeten Einstellung und/oder Bearbeitungsstrategie und einer neuen Einstellung vermieden oder aufgehoben werden kann. Durch das Vorsehen von Konfliktverarbeitungsstrategien kann somit eine sichere Verstellung oder Nichtverstellung der Einstellung der landwirtschaftlichen Arbeitsmaschine erreicht werden. Durch Konflikte hervorgerufene Störungen von Arbeitsabläufen können dadurch entsprechend verhindert werden. Besonders bevorzugt wird der Konflikt dadurch vermieden oder aufgehoben, dass das Fahrerassistenzsystem basierend auf der Konfliktverarbeitungsstrategie über die Ausführung eines auf den übertragenen Daten basierenden Einstellvorgangs entscheidet. Auch die Bedienung kann erleichtert werden, da auf Basis der Konfliktverarbeitungsstrategien dem Fahrer nur für ihn relevante Einstellungsänderungen bzw. Einstellungsänderungsvorschläge von externen Datenquellen angezeigt werden. Erfindungsgemäß wird die Konfliktprüfung vom Fahrerassistenzsystem durchgeführt.

Gemäß einer Weiterbildung der Erfindung sind in Anspruch 2 bevorzugte Datenquellen beschrieben. Bevorzugte Ausgestaltungen der Datenübertragung sowie deren Verarbeitung im Fahrerassistenzsystem sind in den Ansprüchen 3 und 4 beschrieben.

Als Bearbeitungsstrategie kann nach Anspruch 5 die Maximierung des Durchsatzes abgelegt werden.

Bei dem Einstellvorgang handelt es sich gemäß Anspruch 6 vorzugsweise um einen Einstellvorgang mindestens eines Arbeitsaggregats der landwirtschaftlichen Arbeitsmaschine. Zur Einstellung weisen die empfangenen Daten gemäß Anspruch 7 vorzugsweise Parametereinstellungen, insbesondere Parameterwerte oder Sätze mit mehreren Parameterwerten, für mindestens ein Arbeitsaggregat auf.

Anspruch 8 schlägt verschiedene, im Fahrerassistenzsystem abgelegte, bevorzugte Bearbeitungsstrategien vor.

Insbesondere können im Fahrerassistenzsystem für unterschiedliche Einstellgrößen oder für unterschiedliche Datenquellen unterschiedliche Konfliktverarbeitungsstrategien abgespeichert sein (Anspruch 9). Dies ermöglicht eine besonders komfortable Konfliktverarbeitung, welche Interaktionen des Fahrers der landwirtschaftlichen Arbeitsmaschine mit dem Fahrerassistenzsystem bei einem auf empfangenen Daten basierenden Einstellvorgang auf ein Minimum reduziert oder sogar vermeidet.

Gemäß Ansprüche 10 und 11 kann die Einstellung vom Fahrer oder vom Farm-Management Software überschrieben werden.

Gemäß Anspruch 12 kann das Fahrerassistenzsystem den Fahrer über die Ausführung eines auf den übertragenen Daten basierenden Einstellvorgangs benachrichtigen.

Anspruch 13 betrifft eine bevorzugte Übertragung der Daten zwischen der Datenquelle und dem Fahrerassistenzsystem über ein mobiles Datenübertragungsgerät.

Im Folgenden wird die Erfindung anhand einer lediglich Ausführungsbeispiele darstellenden Zeichnung näher erläutert. In der Zeichnung zeigt
- Fig. 1: eine schematische Darstellung eines vorschlagsgemäßen Datenübertragungssystems für landwirtschaftliche Arbeitsmaschinen und

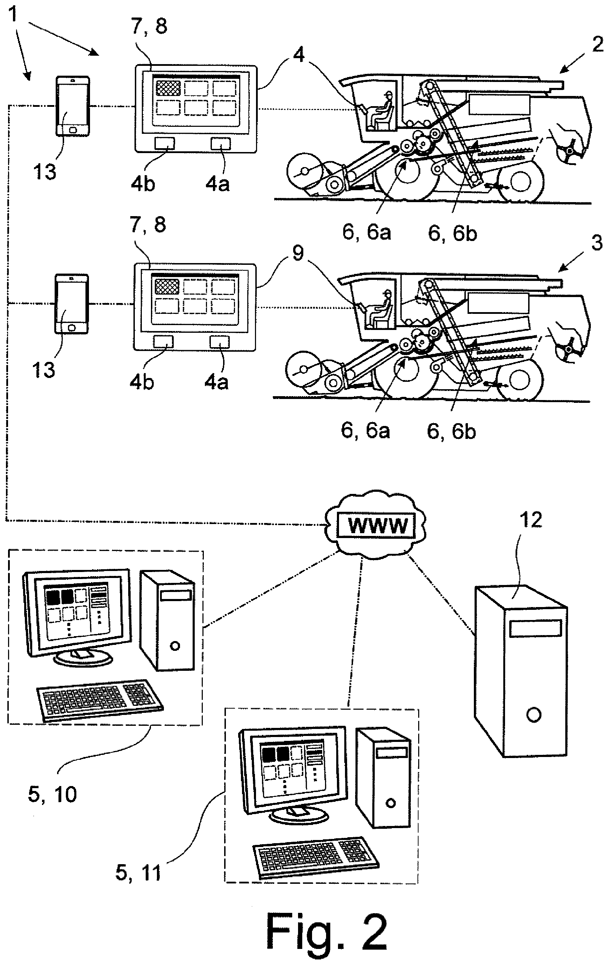

- Fig. 2: eine weitere schematische Darstellung des Datenübertragungssystems aus Fig. 1.

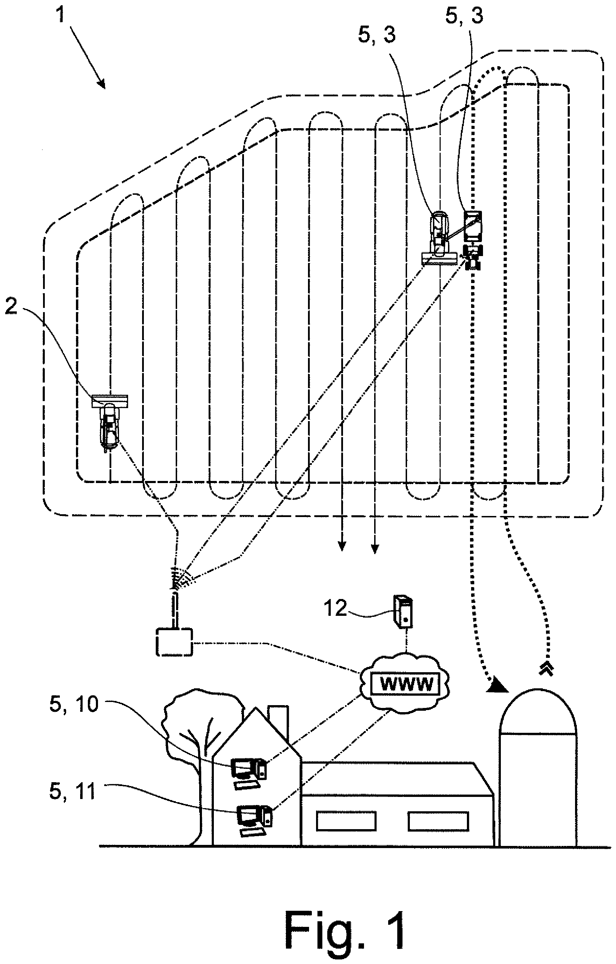

In der Fig. 1 ist ein vorschlagsgemäßes Datenübertragungssystem 1 für landwirtschaftliche Arbeitsmaschinen 2, 3 gezeigt.

Es weist vorzugsweise mindestens eine vorschlagsgemäße landwirtschaftliche Arbeitsmaschine 2 mit einem Fahrerassistenzsystem 4 und eine Datenquelle 5 auf. Im Ausführungsbeispiel sind eine erste landwirtschaftliche Arbeitsmaschine 2 und zwei weitere landwirtschaftliche Arbeitsmaschinen 3 vorgesehen. Dabei sind im Ausführungsbeispiel die weiteren landwirtschaftlichen Arbeitsmaschinen 3 Datenquellen 5.

Bei der landwirtschaftlichen Arbeitsmaschine 2 bzw. den landwirtschaftlichen Arbeitsmaschinen 2, 3 kann es sich um eine Erntemaschine, insbesondere einen Mähdrescher oder einen Feldhäcksler, oder um eine Zugmaschine und/oder einen Traktor o. dgl. handeln. Im Ausführungsbeispiel ist die landwirtschaftliche Arbeitsmaschine 2 eine Erntemaschine. Die weiteren landwirtschaftlichen Arbeitsmaschinen 3 sind eine weitere Erntemaschine und ein Traktor mit Anhänger.

Die landwirtschaftliche Arbeitsmaschine 2 weist bzw. die landwirtschaftlichen Arbeitsmaschinen 2, 3 weisen hier und vorzugsweise Arbeitsaggregate 6 auf. Dabei kann es sich um interne Arbeitsaggregate 6 wie beispielsweise eine Abscheideeinrichtung und/oder ein Dreschwerk handeln. Zusätzlich oder alternativ kann die landwirtschaftliche Arbeitsmaschine auch externe, an diese anbaubare Arbeitsaggregate (Anbaugeräte) aufweisen.

Die landwirtschaftliche Arbeitsmaschine 2 weist ferner ein Fahrerassistenzsystem 4 zur Ansteuerung der Arbeitsaggregate 6 auf. Das Fahrerassistenzsystem 4 umfasst einen Speicher 4a zum Hinterlegen von Daten sowie eine Rechenvorrichtung 4b zur Verarbeitung der im Speicher 4a hinterlegten Daten. Es ist dazu eingerichtet, den Fahrer der landwirtschaftlichen Arbeitsmaschine 5 bei der Bedienung derselben zu unterstützen.

Vorzugsweise steuert das Fahrerassistenzsystem 4 die Arbeitsaggregate 6 nach mindestens einer bedienerseitig vorgebbaren Bearbeitungsstrategie. Die Bearbeitungsstrategie bzw. Bearbeitungsstrategien sind hier und vorzugsweise im Fahrerassistenzsystem 4 abgelegt. Die Bearbeitungsstrategie ist auf die Erfüllung mindestens einer Zielvorgabe ausgerichtet. Die Arbeitsaggregate 6 werden dann anhand dieser Zielvorgabe gesteuert bzw. geregelt. Eine solche Bearbeitungsstrategie kann beispielsweise die "Maximierung des Durchsatzes" der landwirtschaftlichen Arbeitsmaschine 2 oder eines ihrer Arbeitsaggregate 6 und/oder die "Minimierung des Kraftstoffverbrauchs" der landwirtschaftlichen Arbeitsmaschine 2 und/oder die "Maximierung der Qualität" sein. Beispielsweise im Falle einer Erntemaschine kann die Qualität sich auf unterschiedliche Produkte des Arbeitsprozesses der landwirtschaftlichen Arbeitsmaschine 2 beziehen. Im Falle der Erntemaschine kann dies die "Minimierung des Bruchkornanteils" und/oder die "Maximierung der Sauberkeit" und/oder die "Maximierung des Ausdruschs" und/oder die "Maximierung der Strohqualität" sein. Grundsätzlich können auch Mischstrategien der vorgenannten Bearbeitungsstrategien eingestellt werden.

Darüber hinaus kann das vorschlagsgemäße Fahrerassistenzsystem 4 eine mit einem Display 7 ausgestattete Benutzerschnittstelle 8 aufweisen. Über diese kann die Bearbeitungsstrategie und/oder eine Einstellung der landwirtschaftlichen Arbeitsmaschine 2 eingestellt werden. Über diese Benutzerschnittstelle 10 ist auch die Bearbeitungsstrategie einstellbar. Besonders bevorzugt ist die Benutzerschnittstelle 8 ein Touchscreenmonitor.

Mittels dem vorschlagsgemäßen Datenübertragungssystem 1 sind Daten zwischen einer Datenquelle 5 und dem Fahrerassistenzsystem 4 der landwirtschaftlichen Arbeitsmaschine 2 übertragbar.

Basierend auf zwischen der Datenquelle 5 und dem Fahrerassistenzsystem 4 der landwirtschaftlichen Arbeitsmaschine 2 übertragenen Daten kann mindestens ein Einstellvorgang an der landwirtschaftlichen Arbeitsmaschine 2 ausgelöst werden. Dabei kann der basierend auf den übertragenen Daten durchführbare Einstellvorgang an der landwirtschaftlichen Arbeitsmaschine 2 in einem Konflikt zu einer aktuell verwendeten Einstellung und/oder einer aktuell eingestellten Bearbeitungsstrategie dieser landwirtschaftlichen Arbeitsmaschine 2 stehen (konfliktäre Situation). Ist dies der Fall und wird die Einstellung einfach durchgeführt, kann dies zu erheblichen Beeinträchtigungen führen. Beispielsweise kann dann die Produktivität oder die Qualität des Bearbeitungsprozesses nicht mehr aufrechterhalten werden. Im Extremfall kann es sogar zu einem Festfahren und/oder einer Beschädigung an der landwirtschaftlichen Arbeitsmaschine 2 bzw. ihren Arbeitsaggregaten 6 kommen.

Um solchen Problemen vorzubeugen, sind bei dem vorschlagsgemäßen Datenübertragungssystem 1 in dem Daten empfangenden Fahrerassistenzsystem 4 Konfliktverarbeitungsstrategien hinterlegt. Durch die Abarbeitung zumindest einer der hinterlegten Konfliktbearbeitungsstrategien kann so auf besonders einfache Art und Weise der Konflikt vermieden oder aufgehoben werden. Vermieden bzw. aufgehoben wird der Konflikt hier und vorzugsweise, indem das Fahrerassistenzsystem 4 basierend auf der Konfliktverarbeitungsstrategie über die Ausführung eines auf den übertragenen Daten basierenden Einstellvorgangs entscheidet.

Die Datenquelle 5 kann dabei beispielsweise ein Fahrerassistenzsystem 9 einer separaten landwirtschaftlichen Arbeitsmaschine 3 und/oder ein Rechner 10 mit einer Farm-Management-Software und/oder ein Rechner 11 mit einer landwirtschaftlichen Auftragsmanagementsoftware sein. Die Datenübertragung wird hier und vorzugsweise von der Datenquelle 5 der zu übertragenen Daten, auf deren Basis der Einstellvorgang durchführbar ist, initialisiert.

In dem Fall, dass die Datenquelle 5 das Fahrerassistenzsystem 9 einer separaten landwirtschaftlichen Arbeitsmaschine 3 ist, kann diese den Einstellvorgang selbst, insbesondere automatisiert, durch Aufbau einer Datenverbindung zur Datenübertragung zu dem Fahrerassistenzsystem 4 vorschlagen oder vom Fahrer der weiteren landwirtschaftlichen Arbeitsmaschine 3 über das Fahrerassistenzsystem 9 durch Aufbau einer Datenverbindung zur Datenübertragung zu dem Fahrerassistenzsystem 4 vorgeschlagen werden. Im Fahrerassistenzsystem 9 einer weiteren landwirtschaftlichen Arbeitsmaschine 3 generierte Daten können so der landwirtschaftlichen Arbeitsmaschine 2 zur Verfügung gestellt werden.

Die übertragenen Daten können mit Daten einer weiteren Datenquelle 5 und/oder mit Daten des Fahrerassistenzsystems 4 zusammengeführt werden.

Vorzugsweise werden die übertragenen Daten mit Daten einer aktuell verwendeten Einstellung der landwirtschaftlichen Arbeitsmaschine 2 zusammengeführt.

Das Fahrerassistenzsystem kann in einer Konfliktprüfung den auf der Basis der übertragenen Daten durchzuführenden Einstellungsvorgang auf einen Konflikt mit der aktuell verwendeten Einstellung und/oder einer aktuell eingestellten Bearbeitungsstrategie prüfen. Die Konfliktprüfung kann dabei sowohl vor als auch nach dem Zusammenführen der übertragenen Daten mit den Daten einer aktuellen Einstellung erfolgen. Bei bestimmten Konfliktverarbeitungsstrategien kann eine Konfliktprüfung auch unterbleiben, was im Weiteren noch erläutert wird.

Unter einem Konflikt wird erfindungsgemäß verstanden, dass der basierend auf den übertragenen Daten durchführbare Einstellvorgang in einem Widerspruch zu einer aktuell verwendeten Einstellung und/oder einer aktuell eingestellten Bearbeitungsstrategie steht und eine Durchführung dieses Einstellvorgangs zu einer Beeinträchtigung des Bearbeitungsprozesses der landwirtschaftlichen Arbeitsmaschine 2 führt bzw. führen würde und/oder der eingestellten Bearbeitungsstrategie widerspricht bzw. widersprechen würde.

Der auf den übertragenen Daten basierende Einstellvorgang kann dann, insbesondere nach der Konfliktprüfung, aufgrund der Konfliktverarbeitungsstrategie durchgeführt oder nicht durchgeführt werden. Wird er durchgeführt, kann er unmittelbar oder zeitverzögert durchgeführt werden. Das zeitverzögerte Durchführen eines Einstellvorgangs kann auch eine Konfliktverarbeitungsstrategie sein.

Hier und vorzugsweise handelt es sich bei dem durchzuführenden Einstellvorgang um einen Einstellvorgang mindestens eines Arbeitsaggregats 6 der landwirtschaftlichen Arbeitsmaschine 2. Das Arbeitsaggregat 6 kann in einer Einstellgröße und/oder mehreren Einstellgrößen im Einstellvorgang verstellt werden. Bei dem Arbeitsaggregat 6 handelt sich hier und vorzugsweise um ein internes Arbeitsaggregat 6 der landwirtschaftlichen Arbeitsmaschine 2. Dies kann beispielsweise das Dreschwerk 6a und/oder die Abscheideeinrichtung 6b sein. Die übertragenen Daten umfassen hier und vorzugsweise Parametereinstellungen, insbesondere Parameterwerte oder Sätze mit mehreren Parameterwerten, für mindestens ein Arbeitsaggregat 6. Dabei kann einer Einstellgröße ein Parameterwert oder ein Satz von Parameterwerten zugeordnet sein. Diese Parameterwerte bzw. Sätze von mehreren Parameterwerten dienen der direkten Einstellung eines oder mehrerer Arbeitsaggregate 6 in dem Einstellvorgang. Die Übertragung der Daten erfolgt hier und vorzugsweise direkt oder indirekt zwischen der Datenquelle 5 und dem Fahrerassistenzsystem 4 der landwirtschaftlichen Arbeitsmaschine 2. Hier und vorzugsweise erfolgt die Übertragung der Daten indirekt, nämlich über einen zentralen Server 12 zwischen der Datenquelle 5, insbesondere dem Fahrerassistenzsystem 9 einer separaten Daten sendenden landwirtschaftlichen Arbeitsmaschine 3, und dem Fahrerassistenzsystem 4 der Daten empfangenden landwirtschaftlichen Arbeitsmaschine 2.

Für die Konfliktvermeidung bzw. die Konfliktaufhebung sind im Fahrerassistenzsystem 4 für unterschiedliche Einstellgrößen und/oder für unterschiedliche Datenquellen unterschiedliche Konfliktverarbeitungsstrategien abgespeichert.

Beispielsweise kann vorgesehen sein, dass gemäß einer Konfliktverarbeitungsstrategie eine Einstellung eines Arbeitsaggregats 6 oder eines Parameters eines Arbeitsaggregats 6 erst wieder nach einer vordefinierten Zeit möglich ist.

Eine Konfliktverarbeitungsstrategie, welche im Fahrerassistenzsystem 4 abgelegt ist, kann zum Beispiel vorsehen, dass die Ausführung eines auf den übertragenen Daten basierenden Einstellvorgangs für eine vorgegebene Zeit gesperrt ist. Ein Einstellvorgang eines Aggregats 6 ist dann erst wieder nach einer vordefinierten Zeit vornehmbar.

Zusätzlich oder alternativ kann im Fahrerassistenzsystem (4) eine Konfliktverarbeitungsstrategie abgelegt sein, welche die Priorität der Datenquelle (5) der übertragenen Daten, auf deren Basis der Einstellvorgang durchführbar ist, und die Priorität der Datenquelle (5) der Daten, auf denen die aktuell verwendete Einstellung basiert, vergleicht und den auf den übertragenen Daten basierenden Einstellvorgang nur ausführt, wenn die Datenquelle (5) der übertragenen Daten, auf deren Basis der Einstellvorgang durchführbar ist, eine höhere Priorität aufweist, als die Datenquelle (5) der Daten, auf denen die aktuell verwendete Einstellung basiert. In diesem Fall ist eine Konfliktprüfung beispielsweise nicht vorgesehen, da aufgrund einer höheren Priorität die Einstellung ungeprüft übernommen wird. Beispielsweise kann in diesem Fall eine Konfliktprüfung nicht vorgesehen sein, da aufgrund einer höheren Priorität die Einstellung ungeprüft übernommen werden kann.

Der Fahrer der landwirtschaftlichen Arbeitsmaschine 2 kann eine auf empfangenen Daten beruhende Einstellung überschreiben. Er weist eine höhere Priorität auf als die externen Datenquellen 5. Besonders bevorzugt kann der Fahrer der landwirtschaftlichen Arbeitsmaschine 2 eine Einstellung überschreiben, die auf von einem Fahrerassistenzsystem 9 einer separaten landwirtschaftlichen Arbeitsmaschine 3 übertragenen Daten beruht.

Ferner kann vorgesehen sein, dass die Farm-Management-Software eine Einstellung überschreiben kann, die auf von einer Auftragsmanagementsoftware übertragenen Daten beruht. Die Farm-Management-Software weist eine höhere Priorität als die Auftragsmanagementsoftware auf. Die Farm-Management-Software ist eine Software mittels welcher eine Farm, insbesondere eine Flotte von landwirtschaftlichen Arbeitsmaschinen 2, 3 einer Farm, gemanagt werden kann. In ihr sind beispielsweise die gerade durchgeführten Aufgaben und/oder Standorte der landwirtschaftlichen Arbeitsmaschinen 2, 3 abrufbar.

Die Auftragsmanagementsoftware dient dem vorherigen Planen von Arbeitsaufträgen für die landwirtschaftlichen Arbeitsmaschinen 2, 3 und der Übermittlung von solchen Aufgaben an die landwirtschaftlichen Arbeitsmaschinen 2, 3 bzw. deren Fahrer.

Das Fahrerassistenzsystem 4 kann die Ausführung des auf den übertragenen Daten basierenden Einstellvorgangs ohne eine Benachrichtigung des Fahrers und/oder mit einer Benachrichtigung des Fahrers ausführen. Hier und vorzugsweise erfolgt die Benachrichtigung nach oder im Rahmen der Konfliktprüfung. Es kann insbesondere vorgesehen sein, dass der auf den übertragenen Daten basierende Einstellvorgang erst nach einer Bestätigung durch den Fahrer ausgeführt wird.

Beispielsweise kann der Fahrer einer weiteren landwirtschaftlichen Arbeitsmaschine 3 eine aktuelle Einstellung dieser weiteren landwirtschaftlichen Arbeitsmaschine 3 über sein Fahrerassistenzsystem 9 an das Fahrerassistenzsystem 4 der landwirtschaftlichen Arbeitsmaschine 2 übertragen. Dies kann beispielsweise die Erhöhung der Rotordrehzahl der Abscheideeinrichtung 6b sein. Das die Daten empfangende Fahrerassistenzsystem 4 der landwirtschaftlichen Arbeitsmaschine 2 prüft die Einstellungen auf einen Konflikt und entscheidet danach über die Ausführung. Für die Einstellgröße bzw. den Parameter "Rotordrehzahl" konnte kein direkter Konflikt festgestellt werden. Das Fahrerassistenzsystem 4 zeigt dem Fahrer an, dass es den Einstellvorgang durchführen möchte und fragt nach der Freigabe durch den Fahrer. Dieser bestätigt sie und der Einstellvorgang wird durchgeführt.

In einem anderen Beispiel wird von einer Farm-Management-Software eine neue Bearbeitungsstrategie gesendet. Im Fahrerassistenzsystem 4 ist aktuell die Einstellung "Minimieren des Kraftstoffverbrauchs" eingestellt. Die übertragenen Daten von der Farm-Management-Software fordern die Einstellung der Bearbeitungsstrategie "Maximieren des Durchsatzes", was der aktuellen, verbrauchsoptimierten Bearbeitungsstrategie entgegensteht. Das Fahrerassistenzsystem 4 führt eine Konfliktprüfung für die Durchführung des Einstellvorgangs für die Änderung der Bearbeitungsstrategie durch. Dann kann die Konfliktverarbeitungsstrategie angewendet werden. Da die Farm-Management-Software eine höhere Priorität als die Auftragsmanagementsoftware aufweist, auf die hier die Einstellung der Bearbeitungsstrategie "Minimieren des Kraftstoffverbrauchs" zurückgeht, kann der Einstellvorgang auf der Basis der Konfliktverarbeitungsstrategie durchgeführt werden. Die Arbeitsaggregate 6 werden vom Fahrerassistenzsystem 4 auf die Bearbeitungsstrategie "Maximieren des Durchsatzes" eingestellt. Das Fahrerassistenzsystem 4 informiert den Fahrer über die Benutzerschnittstelle 8 über den Wechsel der Bearbeitungsstrategie und führt den Einstellvorgang, hier automatisch, durch.

Schließlich wird darauf hingewiesen, dass zur Übertragung der Daten zwischen der Datenquelle 5 und dem Fahrerassistenzsystem 4, 9 ein mobiles, insbesondere internetfähiges, Datenübertragungsgerät 13 vorgesehen sein kann. Hier und vorzugsweise ist das Fahrerassistenzsystem 4, 9 mit dem Datenübertragungsgerät 13 koppelbar, insbesondere drahtlos koppelbar. Das Datenübertragungsgerät 13 stellt dann hier und vorzugsweise eine Verbindung, insbesondere eine Internetverbindung, zu der Datenquelle 13 bereit. Die Daten werden hier und vorzugsweise über ein Mobilfunknetz und/oder WLAN übertragen. Hierdurch wird die Einbindung von landwirtschaftlichen Arbeitsmaschinen 2, 3 ohne eigene Internetverbindung in das Datenübertragungssystem 1 ermöglicht.

### Bezugszeichen

- 1: Datenübertragungssystem
- 2: Arbeitsmaschinen
- 3: weitere Arbeitsmaschine
- 4: Fahrerassistenzsystem
- 4a: Speicher
- 4b: Rechenvorrichtung
- 5: Datenquelle
- 6: Arbeitsaggregate
- 6a: Dreschwerk
- 6b: Abscheideeinrichtung
- 7: Display
- 8: Benutzerschnittstelle
- 9: Fahrerassistenzsystem als Datenquelle
- 10: Rechner mit einer Farm-Management-Software
- 11: Rechner mit einer landwirtschaftlichen Auftragsmanagementsoftware
- 12: Server
- 13: Datenübertragungsgerät

## Patentansprüche

1. Landwirtschaftliche Arbeitsmaschine mit einem Fahrerassistenzsystem (4), an das **mittels einem Datenübertragungssystem (1)** Daten von einer externen Datenquelle (5) übertragbar sind, wobei basierend auf zwischen der Datenquelle (5) und dem Fahrerassistenzsystem (4) der landwirtschaftlichen Arbeitsmaschine (2) übertragenen Daten mindestens ein Einstellvorgang an der landwirtschaftlichen Arbeitsmaschine (2) auslösbar ist, wobei der basierend auf den übertragenen Daten durchführbare Einstellvorgang an der landwirtschaftlichen Arbeitsmaschine (2) in einem Konflikt zu einer aktuell verwendeten Einstellung und/oder einer aktuell eingestellten Bearbeitungsstrategie dieser landwirtschaftlichen Arbeitsmaschine (2) stehen kann, **wobei ein Konflikt vorliegt, falls der basierend auf den übertragenen Daten durchführbare Einstellvorgang in einem Widerspruch zu einer aktuell verwendeten Einstellung und/oder einer aktuell eingestellten Bearbeitungsstrategie steht und eine Durchführung dieses Einstellvorgangs zu einer Beeinträchtigung des Bearbeitungsprozesses der landwirtschaftlichen Arbeitsmaschine (2) führen würde und/oder der eingestellten Bearbeitungsstrategie widerspricht,**
**dadurch gekennzeichnet,**
**dass** zumindest in dem Daten empfangenden Fahrerassistenzsystem (4) Konfliktverarbeitungsstrategien hinterlegt sind, wobei durch Abarbeitung zumindest einer der hinterlegten Konfliktverarbeitungsstrategien der Konflikt vermieden oder aufgehoben werden kann, wobei das Fahrerassistenzsystem (4) in einer Konfliktprüfung den auf der Basis der übertragenen Daten durchzuführenden Einstellvorgang auf einen Konflikt mit einer aktuell verwendeten Einstellung und/oder einer aktuell eingestellten Bearbeitungsstrategie prüft.

2. Landwirtschaftliche Arbeitsmaschine nach Anspruch 1, **dadurch gekennzeichnet, dass** die Datenquelle (5) ein Fahrerassistenzsystem (9) einer separaten landwirtschaftlichen Arbeitsmaschine (3) ist, und/oder, dass die Datenquelle (5) ein Rechner mit einer Farm Management Software (10) ist, und/oder, dass die Datenquelle (5) ein Rechner mit einer landwirtschaftlichen Auftragsmanagementsoftware (11) ist.

3. Landwirtschaftliche Arbeitsmaschine nach Anspruch 1 oder 2, **dadurch gekennzeichnet, dass** die Datenübertragung von der Datenquelle (5) der zu übertragenden Daten, auf deren Basis der Einstellvorgang durchführbar ist, initialisiert wird.

4. Landwirtschaftliche Arbeitsmaschine nach einem der vorhergehenden Ansprüche, **dadurch gekennzeichnet, dass** die übertragenen Daten mit Daten einer weiteren Datenquelle (5) und/oder mit Daten des Fahrerassistenzsystems (4) zusammengeführt werden.

5. Landwirtschaftliche Arbeitsmaschine nach einem der vorhergehenden Ansprüche, **dadurch gekennzeichnet, dass** im Fahrerassistenzsystem (4) als Bearbeitungsstrategie "Maximierung des Durchsatzes" und/oder "Minimierung des Kraftstoffverbrauchs" und/oder "Maximierung der Qualität" abgelegt ist, vorzugsweise, dass Mischstrategien zwischen diesen Bearbeitungsstrategien einstellbar sind.

6. Landwirtschaftliche Arbeitsmaschine nach einem der vorhergehenden Ansprüche, **dadurch gekennzeichnet, dass** der an der landwirtschaftlichen Arbeitsmaschine (2) durchzuführende Einstellvorgang ein Einstellvorgang mindestens eines Arbeitsaggregats (6) der landwirtschaftlichen Arbeitsmaschine (2) ist, insbesondere des Dreschwerks und/oder der Abscheidevorrichtung.

7. Landwirtschaftliche Arbeitsmaschine nach einem der vorhergehenden Ansprüche, **dadurch gekennzeichnet, dass** die empfangenen Daten Parametereinstellungen, insbesondere Parameterwerte oder Sätze mit mehreren Parameterwerten, für mindestens ein Arbeitsaggregat (6) umfassen.

8. Landwirtschaftliche Arbeitsmaschine nach einem der vorhergehenden Ansprüche, **dadurch gekennzeichnet, dass** im Fahrerassistenzsystem (4) für unterschiedliche Einstellgrößen und/oder für unterschiedliche Datenquelle (5) unterschiedliche Konfliktverarbeitungsstrategien abgespeichert sind.

9. Landwirtschaftliche Arbeitsmaschine nach einem der vorhergehenden Ansprüche, **dadurch gekennzeichnet, dass** im Fahrerassistenzsystem (4) eine Konfliktverarbeitungsstrategie abgelegt ist,
welche die Ausführung eines auf den übertragenen Daten basierenden Einstellvorgangs für eine vorgegebene Zeit sperrt, und/oder,
welche die Priorität der Datenquelle (5) der übertragenen Daten, auf deren Basis der Einstellvorgang durchführbar ist, und die Priorität der Datenquelle (5) der Daten, auf denen die aktuell verwendete Einstellung basiert, vergleicht und den auf den übertragenen Daten basierenden Einstellvorgang nur ausführt, wenn die Datenquelle (5) der übertragenen Daten, auf deren Basis der Einstellvorgang durchführbar ist, eine höhere Priorität aufweist, als die Datenquelle (5) der Daten, auf denen die aktuell verwendete Einstellung basiert.

10. Landwirtschaftliche Arbeitsmaschine nach einem der vorhergehenden Ansprüche, **dadurch gekennzeichnet, dass** der Fahrer der landwirtschaftlichen Arbeitsmaschine (2) eine auf empfangenen Daten beruhende Einstellung überschreiben kann.

11. Landwirtschaftliche Arbeitsmaschine nach einem der vorhergehenden Ansprüche, **dadurch gekennzeichnet, dass** die Farm-Management-Software (10) eine auf von einer Auftragsmanagementsoftware (11) übertragenen Daten beruhende Einstellung überschreiben kann.

12. Landwirtschaftliche Arbeitsmaschine nach einem der vorhergehenden Ansprüche, **dadurch gekennzeichnet, dass** das Fahrerassistenzsystem (4), insbesondere nach der Konfliktprüfung, die Ausführung des auf den übertragenen Daten basierenden Einstellvorgangs ohne eine Benachrichtigung des Fahrers ausführt oder mit Benachrichtigung des Fahrers ausführt, vorzugsweise erst nach einer Bestätigung durch den Fahrer ausführt.

13. Landwirtschaftliche Arbeitsmaschine nach einem der vorhergehenden Ansprüche, **dadurch gekennzeichnet, dass** das Datenübertragungssystem (4) ein mobiles Datenübertragungsgerät (13) aufweist, welches mit dem Fahrerassistenzsystem (4, 9) koppelbar ist und über das die Daten zwischen dem Server (12) und dem Fahrerassistenzsystem (4, 9) über ein Mobilfunknetz übertragen werden.

## Claims

1. An agricultural working machine with a driver assistance system (4) to which data from an external data source (5) can be transferred by means of a data transfer system (1), wherein, based on data transferred between the data source (5) and the driver assistance system (4) of the agricultural working machine (2), at least one setting procedure can be initiated on the agricultural working machine (2), wherein a conflict may arise between the setting procedure which can be carried out on the agricultural working machine (2) based on the transferred data and a currently used setting and/or a currently set processing strategy for this agricultural working machine (2), wherein a conflict arises in the case in which the setting procedure which can be carried out based on the transferred data is in disagreement with a currently used setting and/or a currently set processing strategy and carrying out this setting procedure would lead to an adverse effect on the processing procedure for the agricultural working machine (2) and/or is in disagreement with the set processing strategy,
**characterized in that**
conflict processing strategies are stored in at least the driver assistance system (4) which receives the data, wherein the conflict can be prevented or eliminated by executing at least one of the stored conflict processing strategies, wherein, in a conflict test, the driver assistance system (4) tests the setting procedure to be carried out on the basis of the transferred data for a conflict with a currently used setting and/or a currently set processing strategy.

2. The agricultural working machine according to claim 1, **characterized in that** the data source (5) is a driver assistance system (9) of a separate agricultural working machine (3), and/or **in that** the data source (5) is a processor with farm management software (10), and/or **in that** the data source (5) is a processor with agricultural job management software (11).

3. The agricultural working machine according to claim 1 or claim 2, **characterized in that** the transfer of data is initialised by the data source (5) for the data to be transferred on the basis of which the setting procedure can be carried out.

4. The agricultural working machine according to one of the preceding claims, **characterized in that** the transferred data is combined with data from a further data source (5) and/or with data from the driver assistance system (4).

5. The agricultural working machine according to one of the preceding claims, **characterized in that** the processing strategy stored in the driver assistance system (4) is "Maximise throughput" and/or "Minimise fuel consumption" and/or "Maximise quality", preferably **in that** mixed strategies can be set between these processing strategies.

6. The agricultural working machine according to one of the preceding claims, **characterized in that** the setting procedure which is to be carried out on the agricultural working machine (2) is a setting procedure for at least one working assembly (6) of the agricultural working machine (2), in particular the threshing assembly and/or the separating device.

7. The agricultural working machine according to one of the preceding claims, **characterized in that** the data which are received comprise parameter settings, in particular parameter values or sets with a plurality of parameter values for at least one working assembly (6).

8. The agricultural working machine according to one of the preceding claims, **characterized in that** different conflict processing strategies are stored in the driver assistance system (4) for different setting variables and/or for different data sources (5).

9. The agricultural working machine according to one of the preceding claims, **characterized in that** a conflict processing strategy is stored in the driver assistance system (4) which blocks the execution of a setting procedure based on the transferred data for a specified time, and/or
which compares the priority of the data source (5) for the transferred data on the basis of which the setting procedure can be carried out and the priority of the data source (5) for data on which the currently used setting is based and only executes the setting procedure based on the transferred data if the data source (5) for the transferred data on the basis of which the setting procedure can be carried out has a higher priority than the data source (5) for data on which the currently used setting is based.

10. The agricultural working machine according to one of the preceding claims, **characterized in that** the driver of the agricultural working machine (2) can override a setting based on received data.

11. The agricultural working machine according to one of the preceding claims, **characterized in that** the farm management software (10) can override a setting based on data transferred by job management software (11).

12. The agricultural working machine according to one of the preceding claims, **characterized in that**, in particular after the conflict test, the driver assistance system (4) executes the setting procedure based on the transferred data without a notification from the driver or with a notification from the driver, preferably only after a confirmation by the driver.

13. The agricultural working machine according to one of the preceding claims, **characterized in that** the data transfer system (4) has a mobile data transfer device (13) which can be coupled to the driver assistance system (4, 9) and via which the data are transferred between the server (12) and the driver assistance system (4, 9) via a mobile phone network.

## Revendications

1. Machine de travail agricole comprenant un système d'assistance à la conduite (4) auquel des données sont transmissibles par une source de données externe (5) **au moyen d'un système de transmission de données (1),** au moins une opération de réglage étant déclenchable sur la machine de travail agricole (2) sur la base de données transmises entre la source de données (5) et le système d'assistance à la conduite (4) de la machine de travail agricole (2), l'opération de réglage réalisable sur la machine de travail agricole (2) sur la base des données transmises pouvant être en conflit avec un réglage en cours d'utilisation et/ou avec une stratégie de traitement en cours d'exécution de la machine de travail agricole (2), **un conflit survenant si l'opération de réglage réalisable sur la base des données transmises est en contradiction avec un réglage en cours d'utilisation et/ou avec une stratégie de traitement en cours d'exécution et si une réalisation de cette opération de réglage provoquerait une perturbation du processus de traitement de la machine de travail agricole (2) et/ou contredit la stratégie de traitement exécutée, caractérisée en ce qu'**au moins dans le système d'assistance à la conduite (4) recevant des données sont enregistrées des stratégies de traitement de conflits, le conflit pouvant être évité ou supprimé par l'exécution au moins d'une des stratégies de traitement de conflits enregistrées, le système d'assistance à la conduite (4) contrôlant, dans un contrôle de conflits, l'opération de réglage à réaliser sur la base des données transmises sous l'angle d'un conflit avec un réglage en cours d'utilisation et/ou avec une stratégie de traitement en cours d'exécution.

2. Machine de travail agricole selon la revendication 1, **caractérisée en ce que** la source de données (5) est un système d'assistance à la conduite (9) d'une machine de travail agricole séparée (3), et/ou **en ce que** la source de données (5) est un ordinateur avec un Farm Management Software (10), et/ou **en ce que** la source de données (5) est un ordinateur avec un logiciel de gestion de tâches agricoles (11).

3. Machine de travail agricole selon la revendication 1 ou 2, **caractérisée en ce que** la transmission de données est déclenchée par la source de données (5) des données à transmettre sur la base desquelles l'opération de réglage est réalisable.

4. Machine de travail agricole selon une des revendications précédentes, **caractérisée en ce que** les données transmises sont réunies avec des données d'une autre source de données (5) et/ou avec des données du système d'assistance à la conduite (4).

5. Machine de travail agricole selon une des revendications précédentes, **caractérisée en ce que** la stratégie de traitement mémorisée dans le système d'assistance à la conduite (4) est « maximisation du débit » et/ou « minimisation de la consommation de carburant » et/ou « maximisation de la qualité », préférentiellement **en ce que** des stratégies mixtes entre ces stratégies de traitement peuvent être instaurées.

6. Machine de travail agricole selon une des revendications précédentes, **caractérisée en ce que** l'opération de réglage à réaliser sur la machine de travail agricole est une opération de réglage au moins d'un organe de travail (6) de la machine de travail agricole (2), en particulier du système de battage et/ou du dispositif séparateur.

7. Machine de travail agricole selon une des revendications précédentes, **caractérisée en ce que** les données reçues incluent des réglages paramétriques, en particulier des valeurs paramétriques ou des ensembles avec plusieurs valeurs paramétriques, pour au moins un organe de travail (6).

8. Machine de travail agricole selon une des revendications précédentes, **caractérisée en ce que** différentes stratégies de traitement de conflits sont mémorisées dans le système d'assistance à la conduite (4) pour différentes grandeurs de réglage et/ou pour différentes source de données (5).

9. Machine de travail agricole selon une des revendications précédentes, **caractérisée en ce que** dans le système d'assistance à la conduite (4) est mémorisée une stratégie de traitement de conflits qui empêche pendant une durée prescrite l'exécution d'une opération de réglage basée sur les données transmises, et/ou, qui compare la priorité de la source de données (5) des données transmises sur la base desquelles l'opération de réglage est exécutée et la priorité de la source de données (5) des données sur lesquelles se base le réglage en cours d'utilisation et n'exécute l'opération de réglage basée sur les données transmises que si la source de données (5) des données transmises, sur la base desquelles l'opération de réglage est exécutable, présente une priorité plus grande que la source de données (5) des données sur lesquelles est basé le réglage en cours d'utilisation.

10. Machine de travail agricole selon une des revendications précédentes, **caractérisée en ce que** le conducteur de la machine de travail agricole (2) peut écraser un réglage reposant sur des données reçues.

11. Machine de travail agricole selon une des revendications précédentes, **caractérisée en ce que** le Farm Management Software (10) peut écraser un réglage reposant sur des données transmises par un logiciel de gestion de tâches (11).

12. Machine de travail agricole selon une des revendications précédentes, **caractérisée en ce que** le système d'assistance à la conduite (4) réalise, en particulier après le contrôle de conflits, l'exécution de l'opération de réglage basée sur les données transmises sans en aviser le conducteur ou en en avisant le conducteur, préférentiellement seulement après une confirmation par le conducteur.

13. Machine de travail agricole selon une des revendications précédentes, **caractérisée en ce que** le système de transmission de données (4) comporte un appareil mobile de transmission de données (13) qui est couplable au système d'assistance à la conduite (4, 9) et par l'intermédiaire duquel les données sont transmises entre le serveur (12) et le système d'assistance à la conduite (4, 9) à travers un réseau radio mobile.
